# EUROPÄISCHE PATENTSCHRIFT

(11) **EP 3 580 048 B1**
(45) Veröffentlichungstag und Bekanntmachung des Hinweises auf die Patenterteilung: **10.11.2021**
(21) Anmeldenummer: 18702996.2
(22) Anmeldetag: 01.02.2018
(51) Int. Cl.: B29C 70/44, B29C 33/52, B29C 33/70, B29L 31/30

(54) **VERFAHREN ZUR HERSTELLUNG EINES HOHLTRÄGERS AUS EINEM FASERVERBUNDMATERIAL UND VERWENDUNG DES HOHLTRÄGERS AUS FASERVERBUNDMATERIAL**
METHOD FOR PRODUCING A HOLLOW SUPPORT FROM A FIBER COMPOSITE MATERIAL AND USE OF SAID HOLLOW SUPPORT MADE FROM FIBER COMPOSITE MATERIAL
PROCÉDÉ DE FABRICATION D'UN PROFILÉ PORTEUR CREUX EN MATÉRIAU COMPOSITE RENFORCÉ PAR DES FIBRES ET UTILISATION DU PROFILÉ PORTEUR CREUX EN MATÉRIAU COMPOSITE RENFORCÉ PAR DES FIBRES

(30) Priorität: 09.02.2017 DE 102017102565
(43) Veröffentlichungstag der Anmeldung: 18.12.2019
(73) Patentinhaber: CRRC Qingdao Sifang Co., Ltd., Qingdao City, Shandong 266111 (CN); CG Rail - Chinesisch-Deutsches Forschungs - Und Entwicklungszentrum Für Bahn - Und Verkehrstechnik Dresden GmbH, 01067 Dresden (DE)
(72) Erfinder: DING, Sansan, 266111 Qingdao (CN); LIU, Yuwen, Qingdao Shandong 266111 (CN); CHEN, Xu, Qingdao Shandong 266111 (CN); DONG, Li, Qingdao Shandong 266111 (CN); CAI, Mao, Qingdao Shandong 266111 (CN); ZHANG, Xu, Qingdao Shandong 266111 (CN); HUFENBACH, Werner, 01324 Dresden (DE); ULBRICHT, Andreas, 01324 Dresden (DE); DENG, Xiaojun, Qingdao Shandong 266111 (CN)
(74) Vertreter: Prinz & Partner mbB
(86) Internationale Anmeldenummer: PCT/EP2018/052522
(87) Internationale Veröffentlichungsnummer: WO 2018/145993

(56) Entgegenhaltungen:
- DE-A1- 10 342 867
- DE-B3-102005 011 930
- US-A1- 2005 191 919

## Beschreibung

Die Erfindung betrifft ein Verfahren zur Herstellung eines Hohlträgers aus einem Faserverbundmaterial, und die Verwendung des Hohlträgers aus Faserverbundmaterial.

Bei der Herstellung hohler Bauteile aus Faserverbundmaterial (auch Faser-Kunststoff-Verbund-Material, FKV-Material) kommen Formkörper für die Faserablage in Form von Kernen mit zum Teil sehr komplizierten Geometrien zum Einsatz. Die Geometrie des Kerns bestimmt die Geometrie des Faserverbundbauteils.

Prinzipiell besteht die Möglichkeit, Dauerkerne einzusetzen, die beispielsweise durch Entformungsschrägen oder thermischen Schrumpf aus einem Bauteil ausgelöst werden können. Bei komplexeren Geometrien mit Hinterschnitten und/oder Krümmungen ist die Auslösung eines Kernes nicht ohne weiteres möglich, so dass in diesen Fällen zumeist verlorene Kerne eingesetzt werden. Die Kerne müssen eine ausreichende Maßhaltigkeit aufweisen, die Möglichkeit zur Verwendung in automatisierten Verfahren bieten und die Darstellung von komplexen Geometrien ermöglichen.

Außerdem muss ein Kern für die Faserablage sehr stabil sein, da beispielsweise beim maschinellen Umflechten oder Umwickeln hohe Zug- und/oder Druckkräfte auf den Kern wirken.

Aus dem Stand der Technik, z. B. aus der DE 10 2011 085029 A1, ist die Verwendung von Kernen aus Schaumstoff bekannt, die nach der Faserablage im Bauteil verbleiben. Nachteilig weist der Schaumstoff nur eine begrenzte mechanische Stabilität auf. Außerdem ist das Verbleiben eines Kerns im Bauteil für viele Anwendungen ungünstig.

Die EP 1 197 309 B1 beschreibt den Einsatz verlorener Kerne aus Wachs, die nach der Bauteilherstellung ausgeschmolzen werden und daher im fertigen Bauteil nicht mehr vorzufinden sind. Nachteilig ist das Verfahren sehr aufwändig, beispielweise dadurch, dass jeweils das vollständige Erstarren des Wachses abgewartet werden muss. Des Weiteren ist Wachs als Kernwerkstoff wiederum nur begrenzt zug- und druckfest.

Ebenfalls aufgrund der begrenzten Stabilität sind auswaschbare Kerne aus wasserlöslichen Materialien wie "Aquacore" für Anwendungen, bei denen hohe Zug- und/oder Druckkräfte auftreten, wenig geeignet.

Die DE 10 2008 016 616 A1 beschreibt ein Verfahren zum Herstellen eines hohlen Faserverbundbauteils, bei dem ein Vorformling aus Fasern unmittelbar auf einen Kern gewickelt oder gewebt oder geflochten wird und der Vorformling mit dem Kern anschließend in eine Kavität eines Spritzwerkzeugs eingelegt wird, wobei als Kern ein aus Kunststoff hergestellter Hohlkörper verwendet wird. Bei diesem handelt es sich insbesondere um eine Blasform.

In der DE 10 2010 056 293 A1 ist ein Verfahren zum Herstellen eines hohlen Faserverbundbauteils beschrieben, bei dem eine verlorene Ausgangsform, insbesondere eine Blasform, mit zumindest einer Lage aus Verstärkungsfasern umgeben wird, die dann mit einem elastischen Dichtmittel unlösbar bedeckt wird, um einen wiederverwendbaren, schlauchartigen Formkörper auszubilden, wobei die Verstärkungsfasern und das elastische Dichtmittel so angeordnet werden, dass die Verstärkungsfasern zwischen der inneren und der äußeren Oberfläche des Formkörpers alternieren. Der Formkörper wird dann aufgepumpt und mit den Verstärkungsfasern des Faserverbundbauteils belegt. Nachteilig ist das Verfahren sehr aufwändig und vorrangig zur Herstellung dünnwandiger Faserverbundbauteile geeignet.

Aus der US 2005/191919 A1 ist ein als Hohlkörper ausgebildeter, eigenstabiler Kern gezeigt, der zur Herstellung eines Hohlträgers aus einem Faserverbundmaterial geeignet ist.

Die DE 10 2005 011930 B3 zeigt ein Verfahren zur Herstellung eines Hohlträgers aus einem Faserverbundmaterial unter Verwendung eines Formkörpers aus einem Verbundmaterial aufweisend eine lösliche Kunststoffmatrix.

In der DE 103 42 867 A1 ist ein Verfahren zur Herstellung eines wasserlöslichen Formkerns aus einer wasserlöslichen Formmasse beschrieben.

Die Aufgabenstellung der vorliegenden Erfindung besteht darin, ein Verfahren zur Herstellung von komplexen Faserverbundbauteilen in Form von Hohlträgern vorzuschlagen, das die oben genannten Nachteile des Stands der Technik überwindet und insbesondere zur Herstellung dickwandiger Faserverbundbauteile geeignet ist.

Die Aufgabe wird gelöst durch das erfindungsgemäße Verfahren mit den in Anspruch 1 aufgeführten Merkmalen. Bevorzugte Weiterbildungen der Erfindung sind Gegenstand von Unteransprüchen.

Mit dem erfindungsgemäßen Verfahren können mit einer vergleichsweise einfachen Vorgehensweise insbesondere auch dickwandige Hohlträger aus Faserverbundmaterial und/oder Hohlträger mit einem hohen Faservolumengehalt hergestellt werden. Das erfindungsgemäße Verfahren erlaubt die Herstellung von Hohlträgern komplexer Geometrien einschließlich Krümmungen, Hinterschnitten und Querschnittsvariationen. Der hohle, eigenstabile Formkörper eröffnet vorteilhaft die Möglichkeit einer weitgehenden Automatisierung von Verfahrensschritten des erfindungsgemäßen Verfahrens. Ein mittels des erfindungsgemäßen Verfahrens hergestellter Hohlträger weist eine gleichmäßige und faltenfreie Außenkontur auf.

Als Fasern können alle geeigneten Arten von Verstärkungsfasern, wie Natur- oder Kunstfasern, beispielsweise Glas- oder Kohlenstoff- oder Aramid-Fasern oder Gemische verschiedener Fasertypen verwendet werden, wobei bevorzugt Kohlenstoff-Fasern verwendet werden.

Als Matrixmaterial des Hohlträgers können prinzipiell alle geeigneten Harzsysteme verwendet werden, insbesondere Epoxidharz, Vinylesterharz oder Polyesterharz.

Insbesondere kann Verfahrensschritt e) auch nach oder in Kombination mit Verfahrensschritt f) durchgeführt werden.

In einer Ausführungsform des erfindungsgemäßen Verfahrens umfasst Verfahrensschritt a) das Bereitstellen eines als Hohlkörper ausgebildeten Formkörpers aus einem Faserverbundmaterial, ein Anformen der äußeren Oberfläche des Formkörpers an die innere Oberfläche eines zwei- oder mehrteiligen Außenwerkzeugs oder ein Anformen der inneren Oberfläche des Formkörpers an die äußere Oberfläche eines Kerns als Innenwerkzeug.

In einer weiteren Ausführungsform des erfindungsgemäßen Verfahrens umfasst Verfahrensschritt a) das Bereitstellen eines als Hohlkörper ausgebildeten Formkörpers aus einem Faserverbundmaterial, die Ablage von durch Tränkung mit dem löslichen Matrixmaterial vorkonfektionierten Platten aus einem Verstärkungsfaser-Gewebe oder einem, bevorzugt unidirektionalen, Verstärkungsfaser-Gelege, oder die Ablage von ungetränktem Verstärkungsfaser-Gewebe oder einem, bevorzugt unidirektionalen, ungetränkten Verstärkungsfaser-Gelege und die schichtweise Tränkung der einzelnen Gewebe- oder Gelegeschichten mit dem löslichen Matrixmaterial.

Bevorzugt erfolgt die Ablage von vorkonfektionierten Platten aus einem Verstärkungsfaser-Gewebe oder Verstärkungsfaser-Gelege oder die Ablage von ungetränktem Verstärkungsfaser-Gewebe oder Verstärkungsfaser-Gelege und die schichtweise Tränkung in einem zwei- oder mehrteiligen Außenwerkzeug; danach erfolgt die Konsolidierung des Faserverbundmaterials der Formkörperteile unter Nutzung eines geeigneten Gegenwerkzeugs, beispielsweise eines festen Gegenwerkzeugs oder eines Druckschlauchs, und das Auslösen der Formkörperteile aus dem Werkzeug.

Alternativ bevorzugt erfolgt die Ablage von vorkonfektionierten Platten aus einem Verstärkungsfaser-Gewebe oder Verstärkungsfaser-Gelege oder die Wicklung von Verstärkungsfasern und anschließende Tränkung mit Matrixmaterial auf einem Kern, insbesondere einem Kern aus einem Leichtmetall wie Aluminium, als Innenwerkzeug; danach erfolgt die Konsolidierung des Faserverbundmaterials des Formkörpers unter Nutzung eines geeigneten Gegenwerkzeugs, beispielsweise eines festen Gegenwerkzeugs oder eines Druckschlauchs. Das Auslösen des Innenwerkzeugs erfolgt durch ein Auftrennen des Formkörpers.

Das Fügen der Formkörperteile zu einem Formkörper erfolgt bevorzugt dadurch, dass eine vorkonfektionierte Platte eines Faserverbundmaterials gleichen Typs wie das des Formkörpers über den Trennstellen angeordnet und mit der Oberfläche des Formkörpers verbunden wird.

In einer weiteren Ausführungsform des erfindungsgemäßen Verfahrens ist das Matrixmaterial des Formkörpers wasserlöslich. Vorteilhaft kann der Formkörper dadurch besonders einfach aus dem herzustellenden Hohlträger ausgelöst werden.

Bevorzugt ist das Matrixmaterial des Formkörpers Polyvinylalkohol = PVA. Vorteilhaft sind Formkörper mit PVA-Matrix besonders stabil und hoch belastbar, so dass hohe Zug- und Druckkräfte gut aufgenommen werden können.

Verfahrensschritt b) des erfindungsgemäßen Verfahrens umfasst das Anordnen eines zumindest eine, bevorzugt mehrere, folienartige Schichten aufweisenden Vakuumaufbaus auf der äußeren Oberfläche des Formkörpers. Bevorzugt umhüllt der Vakuumaufbau den Formkörper schlauchförmig. Besonders bevorzugt handelt es sich bei dem Vakuumaufbau um einen aus dem Stand der Technik bekannten VAP-Aufbau, (VAP = Vacuum Assisted Process). Vorteilhaft wird durch den Einsatz eines Vakuumaufbaus und insbesondere eines VAP-Aufbaus die Infiltrationsqualität insbesondere bei der Herstellung dickwandiger Hohlträger gesteigert.

In einer weiteren Ausführungsform weist der Vakuumaufbau zumindest eine Schicht bestehend aus einer gasundurchlässigen Vakuumfolie auf.

In einer weiteren Ausführungsform des erfindungsgemäßen Verfahrens weist der Vakuumaufbau zumindest eine Schicht bestehend aus einer semipermeablen Membran auf. Diese Membran ist gasdurchlässig, aber undurchlässig für das Matrixmaterial des Hohlträgers ausgeführt.

Bevorzugt umfasst das erfindungsgemäße Verfahren einen weiteren Verfahrensschritt zur Einbringung lokaler Verstärkungen in Form aufgedickter Wandstärken des Faserverbundmaterials des Hohlträgers, beispielsweise an besonders belasteten Stellen oder in der Umgebung von Bohrungen. Dazu werden nach Verfahrensschritt b) beispielsweise Verstärkungsfaserhalbzeuge oder insbesondere vorkonfektionierte Verstärkungsfaserplatten an den entsprechend aufzudickenden Stellen des Hohlträgers auf der äußeren Oberfläche des Formkörpers, auf der ein Vakuumaufbau oder ein Druckschlauch angeordnet ist, platziert. Vorteilhaft ermöglicht diese besonders bevorzugte Ausführungsform eine kraftflussgerechte Gestaltung des mittels des erfindungsgemäßen Verfahrens herzustellenden Hohlträgers.

Gemäß der Erfindung erfolgt die Ablage der Verstärkungsfasern des Hohlträgers in Verfahrensschritt c) in geflochtener Form. Aufgrund der geringen Masse des hohlen Formkörpers können hierfür vorteilhaft Flechtroboter eingesetzt werden.

Weiterer Gegenstand der Erfindung ist die Verwendung eines mittels des erfindungsgemäßen Verfahrens hergestellten Hohlträgers aus Faserverbundmaterial als Längs- oder Querträger eines Rahmens eines Drehgestells für ein Schienenfahrzeug. Vorteilhaft zeichnet sich ein solcher Längs- oder Querträger durch eine besonders geringe Masse aus, was zu Energieeinsparung im Schienenfahrzeug führt.

Ausführungsbeispiele der Erfindung werden nachfolgend anhand von Figuren erläutert, ohne die Erfindung auf diese zu beschränken.

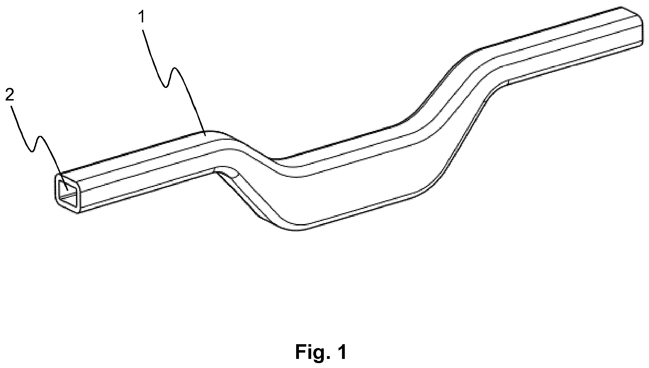

Fig. 1 zeigt einen mittels des erfindungsgemäßen Verfahrens hergestellten Hohlträger 1 aus Faserverbundmaterial mit einer komplexen Geometrie. Der Hohlträger 1 kann als Längsträger eines Drehgestells für ein Schienenfahrzeug eingesetzt werden. Der Hohlträger 1 weist eine mehrfach gekrümmte Außenkontur und einen in Trägerlängsrichtung variierenden Querschnitt auf. Die Form der Außenkontur des zur Herstellung des Hohlträgers 1 verwendeten Kerns (nicht dargestellt) entspricht der des Hohlträgers 1. Die Ablage der Verstärkungsfasern des Hohlträgers 1 auf dem VAP-Aufbau (nicht dargestellt), der auf dem Kern (nicht dargestellt) angeordnet ist, erfolgt zumindest anteilig in geflochtener Form mittels eines Flechtrads oder mehrerer Flechträder. Bei den Verstärkungsfasern handelt es sich um Kohlenstoff-Fasern; als Matrixmaterial wird ein Epoxidharz verwendet. Nach Auflösen und Ausspülen der für den Kern verwendeten, wasserlöslichen PVA-Matrix aus dem Hohlträger-Inneren können die verbliebenen Kern-Reste, z. B. die Verstärkungsfasern (ebenso Kohlenstoff-Fasern) des Kerns, sowie der VAP-Aufbau über die offene Stirnseite 2 des Hohlträgers 1 aus dem Hohlträger-Inneren entfernt werden.

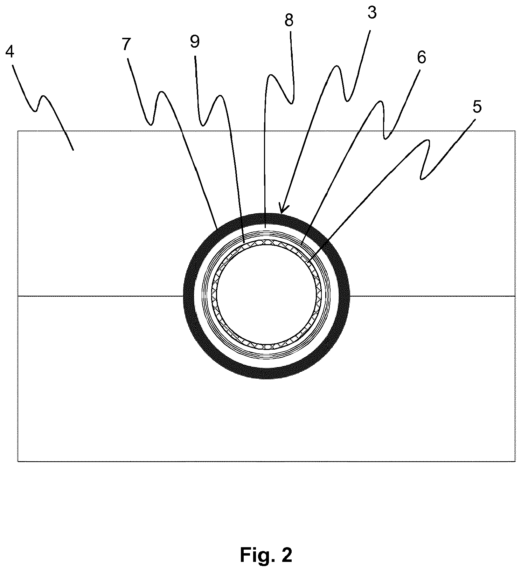

Fig. 2 illustriert die Anordnung einer Hohlträger-Preform 3 in einem Außenwerkzeug 4. Die Hohlträger-Preform 3 umfasst (von innen nach außen) den Kern 5, den VAP-Aufbau 6 und die Verstärkungsfasern 7 des Hohlträgers. Der Kern 5 ist ein Hohlkörper aus einem Faserverbundmaterial mit einer wasserlöslichen Kunststoff-Matrix, insbesondere PVA-Matrix. Der den Kern 5 umhüllende VAP-Aufbau 6 ist mehrschichtig aufgebaut und kann, neben einer gasdurchlässigen, aber für Matrixmaterial undurchlässigen Schicht auch beispielweise eine Fließhilfe-Schicht, ein Schutzvlies und eine Vakuumfolienschicht umfassen. Eine Vakuumfolienschicht ist am Kern angeordnet. Die Kohlenstoff-Verstärkungsfasern 7 des Hohlträgers sind auf dem VAP-Aufbau 6 abgelegt.

Nach dem Einlegen der Hohlträger-Preform 3 in das Außenwerkzeug 4 wird ein Unterdruck durch Abpumpen der Luft im Unterdruckraum 8 zwischen den Verstärkungsfasern 7 des Hohlträgers und dem VAP-Aufbau 6 erzeugt. Der VAP-Aufbau legt sich dadurch an die Verstärkungsfasern 7 des Hohlträgers an und verpresst diese gegen die innere Oberfläche des Außenwerkzeugs 4. Bei Infiltration des Matrixmaterials des Hohlträgers während des Abpumpens der Luft im Unterdruckraum 8 kann dieses die Verstärkungsfasern 7 besonders gleichmäßig benetzen, und es wird eine hohe Infiltrationsqualität erzielt.

Für dünnwandige Bauteile kann eine ausreichende Infiltrationsqualität auch dann erzielt werden, wenn der mehrschichtige VAP-Aufbau mit der abschließenden, am Kern angeordneten Vakuumfolienschicht durch eine einzelne Vakuumfolienschicht oder einen Druckschlauch (nicht dargestellt) ersetzt wird. Bei Einsatz eines Druckschlauchs wird anstatt eines Unterdrucks im Unterdruckraum 8 ein Überdruck im Zwischenraum 9 erzeugt, durch den der Druckschlauch gegen die Verstärkungsfasern 7 gepresst wird.

An die beschriebenen Verfahrensschritte schließt sich die Konsolidierung des Faserverbundes des Hohlträgers unter erhöhter Temperatur an.

### Bezugszeichen

- 1: Hohlträger
- 2: Stirnseite
- 3: Hohlträger-Preform
- 4: Außenwerkzeug
- 5: Kern
- 6: VAP-Aufbau
- 7: Verstärkungsfasern
- 8: Unterdruckraum
- 9: Zwischenraum

## Patentansprüche

1. Verfahren zur Herstellung eines Hohlträgers (1) aus einem Faserverbundmaterial, umfassend zumindest die folgenden Verfahrensschritte:
a) Bereitstellen eines als Hohlkörper ausgebildeten Formkörpers (5) aus einem Faserverbundmaterial, aufweisend Verstärkungsfasern und eine lösliche Kunststoffmatrix aus einem mittels eines Lösungsmittels löslichen Matrixmaterial;
b) Anordnen eines zumindest eine, bevorzugt mehrere folienartige Schichten aufweisenden Vakuumaufbaus (6) oder eines Druckschlauchs auf der äußeren Oberfläche des Formkörpers (5);
c) Ablage der Verstärkungsfasern (7) des Hohlträgers (1) auf der äußeren Oberfläche des auf der äußeren Oberfläche des Formkörpers (5) angeordneten Vakuumaufbaus (6) oder Druckschlauchs zur Bildung einer Hohlträger-Preform (3);
d) Anordnen der Hohlträger-Preform (3) in einem Außenwerkzeug (4);
e) Infiltration der Verstärkungsfasern (7) des Hohlträgers mit Matrixmaterial;
f) Erzeugen eines Unterdrucks zwischen Vakuumaufbau (6) und innerer Oberfläche des Außenwerkzeugs (4) oder eines Überdrucks zwischen äußerer Oberfläche des Formkörpers (5) und Druckschlauch;
g) Konsolidierung des Faserverbunds des Hohlträgers (1) aus Verstärkungsfasern (7) und Matrixmaterial unter Ausbildung einer an die innere Oberfläche des Außenwerkzeugs (4) angeformten äußeren Oberfläche des Hohlträgers (1);
h) Entnahme des konsolidierten Hohlträgers (1) aus dem Außenwerkzeug (4);
i) Entfernen der löslichen Kunststoffmatrix des Formkörpers (5) durch Auflösen mittels eines Lösungsmittels;
j) Entfernen der Verstärkungsfasern des Formkörpers (5) und des Vakuumaufbaus (6) über eine der Stirnseiten (2) des Hohlträgers (1),
wobei die Ablage der Verstärkungsfasern (7) des Hohlträgers (1) in Verfahrensschritt c) in einer geflochtenen Form erfolgt.

2. Verfahren zur Herstellung eines Hohlträgers (1) aus einem Faserverbundmaterial nach Anspruch 1, **dadurch gekennzeichnet, dass** das Bereitstellen des Formkörpers (5) in Verfahrensschritt a)
- ein Anformen der äußeren Oberfläche des Formkörpers (5) aus Faserverbundmaterial an die innere Oberfläche eines zwei- oder mehrteiligen Außenwerkzeugs (4) oder
- ein Anformen der inneren Oberfläche des Formkörpers (5) aus Faserverbundmaterial an die äußere Oberfläche eines Kerns als Innenwerkzeug
umfasst.

3. Verfahren zur Herstellung eines Hohlträgers (1) aus einem Faserverbundmaterial nach Anspruch 1 oder 2, **dadurch gekennzeichnet, dass** das Bereitstellen des Formkörpers (5)
- die Ablage von durch Tränkung mit dem löslichen Matrixmaterial vorkonfektionierten Platten aus einem Gewebe oder einem, bevorzugt unidirektionalen, Gelege;
oder
- die Ablage von ungetränktem Gewebe oder einem, bevorzugt unidirektionalen, ungetränkten Gelege und die schichtweise Tränkung mit dem löslichen Matrixmaterial
umfasst.

4. Verfahren zur Herstellung eines Hohlträgers (1) aus einem Faserverbundmaterial nach einem der Ansprüche 1 bis 3, **dadurch gekennzeichnet, dass** das Matrixmaterial des Formkörpers (5) wasserlöslich ist.

5. Verfahren zur Herstellung eines Hohlträgers (1) aus einem Faserverbundmaterial nach Anspruch 4, **dadurch gekennzeichnet, dass** das Matrixmaterial des Formkörpers (5) Polyvinylalkohol, PVA, ist.

6. Verfahren zur Herstellung eines Hohlträgers (1) aus einem Faserverbundmaterial nach einem der Ansprüche 1 bis 5, **dadurch gekennzeichnet, dass** der Vakuumaufbau (6) zumindest eine Schicht, bestehend aus einer Vakuumfolie, aufweist.

7. Verfahren zur Herstellung eines Hohlträgers (1) aus einem Faserverbundmaterial nach einem der Ansprüche 1 bis 6, **dadurch gekennzeichnet, dass** der Vakuumaufbau (6) zumindest eine Schicht, bestehend aus einer semipermeablen Membran, aufweist.

8. Verwendung eines mittels des Verfahrens nach einem der Ansprüche 1 bis 7 hergestellten Hohlträgers (1) aus Faserverbundmaterial als Längs- oder Querträger eines Rahmens eines Drehgestells für ein Schienenfahrzeug.

## Claims

1. A method of producing a hollow support (1) from a fiber composite material, comprising at least the following method steps:
(a) providing a molded body (5), formed as a hollow body, from a fiber composite material, including reinforcing fibers and a soluble plastic matrix made from a matrix material soluble using a solvent;
(b) arranging a vacuum setup (6) including at least one, preferably several, film-like layers, or a pressure hose, on the outer surface of the molded body (5);
(c) depositing the reinforcing fibers (7) of the hollow support on the outer surface of the vacuum setup (6) or pressure hose arranged on the outer surface of the molded body (5) to form a hollow support preform (3);
(d) arranging the hollow support preform (3) in an outer tool (4);
(e) infiltrating the reinforcing fibers (7) of the hollow support with matrix material;
(f) generating a negative pressure between the vacuum setup (6) and the inner surface of the outer tool (4) or a positive pressure between the outer surface of the molded body (5) and the pressure hose;
(g) consolidating the fiber composite of the hollow support (1) made from reinforcing fibers (7) and matrix material with the formation of an outer surface of the hollow support (1) integrally molded with the inner surface of the outer tool (4);
(h) removing the consolidated hollow support (1) from the outer tool (4);
(i) removing the soluble plastic matrix of the molded body (5) by dissolving using a solvent;
(j) removing the reinforcing fibers of the molded body (5) and of the vacuum setup (6) via one of the front sides (2) of the hollow support (1),
wherein the reinforcing fibers (7) of the hollow support (1) are deposited in a braided form in method step (c).

2. The method of producing a hollow support (1) from a fiber composite material according to claim 1, **characterized in that** providing the molded body (5) in method step (a) comprises
- integrally molding the outer surface of the molded body (5) made from fiber composite material with the inner surface of a two- or multi-part outer tool (4)
or
- integrally molding the inner surface of the molded body (5) made from fiber composite material with the outer surface of a core as an inner tool.

3. The method of producing a hollow support (1) from a fiber composite material according to claim 1 or 2, **characterized in that** providing the molded body (5) comprises
- depositing of sheets made from a woven fabric or a preferably unidirectional non-crimp fabric pre-fabricated by impregnation with the soluble matrix material;
or
- depositing of an unimpregnated woven fabric or a preferably unidirectional unimpregnated non-crimp fabric and impregnating in layers with the soluble matrix material.

4. The method of producing a hollow support (1) from a fiber composite material according to any of claims 1 to 3, **characterized in that** the matrix material of the molded body (5) is soluble in water.

5. The method of producing a hollow support (1) from a fiber composite material according to claim 4, **characterized in that** the matrix material of the molded body (5) is polyvinyl alcohol, PVA.

6. The method of producing a hollow support (1) from a fiber composite material according to any of claims 1 to 5, **characterized in that** the vacuum setup (6) includes at least one layer consisting of a vacuum film.

7. The method of producing a hollow support (1) from a fiber composite material according to any of claims 1 to 6, **characterized in that** the vacuum setup (6) includes at least one layer consisting of a semi-permeable membrane.

8. Use of a hollow support (1) made from fiber composite material, produced by means of the method according to any of claims 1 to 7, as longitudinal or cross beam of a frame of a bogie for a rail vehicle.

## Revendications

1. Procédé de fabrication d'un support creux (1) à partir d'un matériau composite fibreux, comprenant au moins les étapes de procédé suivantes :
a) fournissement d'un corps moulé (5) réalisé sous forme de corps creux à partir d'un matériau composite fibreux, comprenant des fibres de renforcement et une matrice plastique soluble en un matériau matriciel soluble au moyen d'un solvant ;
b) agencement d'un assemblage à vide (6) présentant au moins une, de préférence une pluralité de couches en forme de feuilles, ou d'un tuyau à pression sur la surface extérieure du corps moulé (5) ;
c) dépôt des fibres de renforcement (7) du support creux (1) sur la surface extérieure de l'assemblage à vide (6) ou du tuyau à pression agencé sur la surface extérieure du corps moulé (5) de manière à former une préforme (3) de support creux ;
d) agencement de la préforme (3) de support creux dans un outil extérieur (4) ;
e) infiltration des fibres de renforcement (7) du support creux avec le matériau matriciel ;
f) génération d'une dépression entre l'assemblage à vide (6) et la surface intérieure de l'outil extérieur (4), ou d'une surpression entre la surface extérieure du corps moulé (5) et le tuyau à pression ;
g) consolidation du composite fibreux du support creux (1) en fibres de renforcement (7) et en matériau matriciel formant ainsi une surface extérieure du support creux (1) moulé avec la surface intérieure de l'outil extérieur (4) ;
h) retrait du support creux (1) consolidé de l'outil extérieur (4) ;
i) retrait de la matrice plastique soluble du corps moulé (5) par dissolution au moyen d'un solvant ;
j) retrait des fibres de renforcement du corps moulé (5) et de l'assemblage à vide (6) par l'une des faces frontales (2) du support creux (1),
le dépôt des fibres de renforcement (7) du support creux (1) à l'étape de procédé c) étant réalisé de manière tressée.

2. Procédé de fabrication d'un support creux (1) à partir d'un matériau composite fibreux selon la revendication 1, **caractérisé en ce que** le fournissement du corps moulé (5) à l'étape de procédé a) comprend
- un moulage de la surface extérieure du corps moulé (5) en matériau composite fibreux avec la surface intérieure d'un outil extérieur (4) en deux pièces ou en plusieurs pièces,
ou
- un moulage de la surface intérieure du corps moulé (5) en matériau composite fibreux avec la surface extérieure d'un noyau en tant qu'outil intérieur.

3. Procédé de fabrication d'un support creux (1) à partir d'un matériau composite fibreux selon la revendication 1 ou 2, **caractérisé en ce que** le fournissement du corps moulé (5) comprend
- le dépôt de plaques en un tissu ou une nappe de préférence unidirectionnelle pré-confectionnées par imprégnation avec le matériau matriciel soluble ;
ou
- le dépôt de tissu non-imprégné ou d'une nappe de préférence unidirectionnelle non-imprégnée, et l'imprégnation par couches avec le matériau matriciel soluble.

4. Procédé de fabrication d'un support creux (1) à partir d'un matériau composite fibreux selon l'une des revendications 1 à 3, **caractérisé en ce que** le matériau matriciel du corps moulé (5) est soluble dans l'eau.

5. Procédé de fabrication d'un support creux (1) à partir d'un matériau composite fibreux selon la revendication 4, **caractérisé en ce que** le matériau matriciel du corps moulé (5) est de l'alcool polyvinylique, PVA.

6. Procédé de fabrication d'un support creux (1) à partir d'un matériau composite fibreux selon l'une des revendications 1 à 5, **caractérisé en ce que** l'assemblage à vide (6) présente au moins une couche composée d'une feuille sous vide.

7. Procédé de fabrication d'un support creux (1) à partir d'un matériau composite fibreux selon l'une des revendications 1 à 6, **caractérisé en ce que** l'assemblage à vide (6) présente au moins une couche composée d'une membrane semi-perméable.

8. Utilisation d'un support creux (1) en matériau composite fibreux fabriqué au moyen du procédé selon l'une des revendications 1 à 7 en tant que barre longitudinale ou transversale d'un cadre d'un bogie pour un véhicule sur rails.
